# EUROPÄISCHE PATENTSCHRIFT

(11) **EP 3 446 601 B1**
(45) Veröffentlichungstag und Bekanntmachung des Hinweises auf die Patenterteilung: **05.08.2020**
(21) Anmeldenummer: 17001432.8
(22) Anmeldetag: 24.08.2017
(51) Int. Cl.: A47J 31/40

(54) **VORRICHTUNG ZUR ZUBEREITUNG VON BABYMILCHNAHRUNG**
DEVICE FOR PREPARING BABY MILK
DISPOSITIF DE PRÉPARATION DU LAIT MATERNISÉ

(43) Veröffentlichungstag der Anmeldung: 27.02.2019
(73) Patentinhaber: jcr-electronic GmbH, 89407 Dillingen (DE)
(72) Erfinder: Riedinger, Jochen, 89407 Dillingen (DE)

(56) Entgegenhaltungen:
- EP-A1- 1 639 923
- WO-A1-90/04940
- DE-U1- 29 611 088
- US-A1- 2006 045 942

## Beschreibung

Die Erfindung betrifft eine Vorrichtung zur Zubereitung von Babymilchnahrung gemäß dem Oberbegriff des Anspruchs 1.

Die Druckschrift EP 1 639 923 A1 offenbart eine Vorrichtung zur Zubereitung von Getränken aus Pulver oder Granulat und einer Flüssigkeit, mit einer Steuervorrichtung, mit Mitteln zum zuführen einer Flüssigkeit, mit einer Heizvorrichtung und einer Kühleinrichtung für die Flüssigkeit, mit Mitteln zum Dosieren der Flüssigkeit und einem Mischbehälter. Der Mischbehälter ist zwecks Reinigung aus der Vorrichtung herausnehmbar.

Die Druckschrift DE 10 2010 003 974 B4 offenbart einen Babyflaschenzubereitungsautomat zur automatisierten Zubereitung von Nahrungsflaschen für Babys und Kleinkinder. Dieser Automat umfasst Vorratsbehältnisse für Babynahrung in Pulverform und für Wasser, Aufnahmevorrichtungen für eine Babyflasche und für einen Flaschensauger im Schraubring, mit dem er auf der Flasche befestigt wird, Heiz- und Kühlelemente, die das Wasser erhitzen und abkühlen, ein Leitungssystem und Pumpen, um dosierte Mengen an Wasser und Nahrung in Pulverform zu transportieren, einen Quirl, der von einem Motor angetrieben wird und dazu dient, das in die Babyflasche geleitete, zuvor erhitzte und wieder abgekühlte Wasser mit dem ebenso in die Babyflasche transportierten Nahrungspulver in der Flasche zu vermischen, eine weitere Kühlvorrichtung, um die in der Flasche befindliche flüssige Babynahrung abzukühlen, eine motorgetriebene Vorrichtung, um den in der Aufnahmevorrichtung eingespannten Sauger mit der Flasche zu verschrauben, einen Mikroprozessor zur Steuerung des Babyflaschenzubereitungsautomaten, Sensoren zur Überwachung der Mengen, Temperaturen und Betriebszustände sowie Knöpfe und Regler zur Bedienung.

Die DE 20 2007 001 767 U1 offenbart einen Automaten zur Zubereitung von Babynahrung. Bei diesem Automaten sind zwei herausnehmbare Wasserbehälter aus Keramik (oder einem ähnlichen hitzebeständigen und warmhaltenden Material) über aus Metall (oder einem ähnlichen geeigneten Material) bestehende wasserführende Pipelines an einen aus Metall (oder einem ähnlich geeigneten Material) bestehenden herausnehmbaren Zubereitungsbehälter angeschlossen. Zusätzlich an den Zubereitungsbehälter sind über Pipelines aus Metall (oder einem ähnlich geeigneten Material) ein oder mehrere herausnehmbare aus PVC (oder einem artverwandten Kunststoff) bestehende Behälter für Babynahrungspulver angeschlossen. Bei dem Automaten können alle Behälter zusätzlich auf im Automat fest installierten Gewichtswagen stehen, die mit einer Regeleinheit verbunden sind. Weiterhin können die Wasserbehälter sowie der Zubereitungsbehälter mit Temperaturfühlern versehen sein, die wiederum mit der Regeleinheit verbunden sein können. Der Zubereitungsbehälter kann ferner mit einem herausnehmbaren Quirl versehen sein, der wiederum mit der Regeleinheit verbunden sein kann. Überdies können die Wasserbehälter auf Heizplatten beziehungsweise in einer topfförmigen Heizmulde stehen, die wiederum mit der Regeleinheit verbunden sein können.

Vor diesem Hintergrund besteht eine Aufgabe der vorliegenden Erfindung darin, eine Vorrichtung zur Zubereitung von Babymilchnahrung anzugeben, welche durch die Kombination des Aufheizens und Abkühlen in einem Schritt auf die optimale Trinktemperatur alle zusätzlichen Tätigkeiten des Benutzers vermeidet und durch Zumischung der benötigten Menge an Pulver ein trinkfertiges Fläschchen in kürzester Zeit bereitstellt.

Diese erfindungsgemäße Aufgabe wird bei einer Vorrichtung zur Zubereitung von Babymilchnahrung dadurch gelöst, dass sie
- ein Mittel zur Bereitstellung von Wasser, insbesondere Leitungswasser, welches einen ersten Behälter umfasst,
- eine Heizeinrichtung, insbesondere einen Durchlauferhitzer, welcher mit dem Mittel zur Bereitstellung von Wasser, insbesondere Leitungswasser, über mindestens eine Leitung verbunden ist,
- eine Kühleinrichtung, insbesondere einen Durchlaufkühler, welcher mit der Heizeinrichtung, insbesondere mit dem Durchlauferhitzer, über eine Leitung verbunden ist,
- ein Behältnis, in welchem ein festes und wasserlösliches Nahrungsmittel, insbesondere wasserlösliches Milchpulver, bevorratbar ist,
- eine Einrichtung zur Aufnahme eines Gefäßes, insbesondere einer Babytrinkflasche, welche einerseits mit der Kühleinrichtung, insbesondere mit dem Durchlaufkühler, mittels einer Leitung und andererseits mit einem Behältnis mittels einer Leitung, in welcher eine volumengesteuerte Dosiereinrichtung zum dosierten Einbringen des festen und wasserlöslichen Nahrungsmittels, insbesondere wasserlöslichen Milchpulvers, in das Gefäß, insbesondere in die Babytrinkflasche, angeordnet ist, verbunden ist, wobei zwischen den Leitungen eine erste Pumpe, insbesondere eine volumengesteuerte Dosierpumpe, zum dosierten Einbringen des in dem ersten Behälter bevorrateten Wassers, insbesondere Leitungswassers, in die Heizeinrichtung, insbesondere in den Durchlauferhitzer, über die Leitung angeordnet ist.

Die erste Pumpe, insbesondere volumengesteuerte Dosierpumpe, ist eine Schlauchpumpe mit mindestens zwei Betriebsmodi, wobei ein erster Betriebsmodus eine volumengesteuerte Pumpfunktion und ein zweiter Betriebsmodus eine volumen- oder zeitgesteuerte Rücksaugfunktion umfasst.

Die erfindungsgemäße Ausgestaltung der ersten Pumpe ermöglicht eine Rücksaugung des Wassers, insbesondere Leitungswassers, in die Heizeinrichtung. Dadurch ist es möglich, ausschließlich aufgekochtes Wasser durch den Durchlaufkühler zu pumpen. Somit wird kein kaltes Wasser, so genanntes Totvolumen, in das Gefäß, insbesondere in die Babytrinkflasche, dosiert. Dadurch sind konstante Dosiertemperaturen bei kleinsten und auch großen Wassermengen möglich.

Die Verwendung einer volumengesteuerten Dosierpumpe ermöglicht die lageunabhängige Positionierung des Wasserbehälters der Vorrichtung zur Zubereitung von Babymilchnahrung.

In einer ersten bevorzugten Ausführungsform weist die Schlauchpumpe einen Pumpenantrieb, mindestens zwei über den Pumpenantrieb antreibbare Schlauchverformungskörper und einen Pumpenschlauch auf, auf welchen die Schlauchverformungskörper während des Pumpenbetriebs mechanisch einwirken, um das zu fördernde Wasser, insbesondere Leitungswasser, durch den Pumpenschlauch zu fördern.

Der Vorteil der Nutzung der Schlauchpumpe liegt in mehreren Punkten. Einerseits kann die Eigenschaft genutzt werden, dass eine Schlauchpumpe aufgrund Ihrer Bauweise in beide Richtungen die gleiche Menge Wasser, insbesondere Leitungswasser, gleichermaßen fördern kann. Dadurch ergibt sich eine Vielzahl an Möglichkeiten. So kann das Wasser, insbesondere Leitungswasser, vor Beginn des Serviervorgangs wieder zurück in die Heizeinrichtung gesaugt werden bevor es zum Aufheizvorgang kommt. Weiterhin arbeitet eine Schlauchpumpe nahezu drucklos, was sich wiederum auf das entstehende Geräuschniveau auswirkt. Durch das nahezu drucklose Fördern muss auch an Dichtungs- und Verbindungsstellen mit weniger Aufwand abgedichtet werden. Dies wirkt sich auf das Preisniveau der Verbindungen aus. Durch die ständige Walkarbeit der Schlauchverformungskörper an dem Pumpenschlauch ist die Schlauchpumpe insgesamt wenig anfällig gegen Verkalkung, was sich positiv auf den Komfort der Bediener auswirkt, da nicht ständig entkalkt werden muss.

In einer zweiten bevorzugten Ausführungsform ist die Schlauchpumpe derart ausgelegt, dass sie im ersten Betriebsmodus mit einer volumengesteuerten Pumpfunktion bei einer vollumfänglichen Bewegung eines Schlauchverformungskörpers eine Menge an Wasser, insbesondere Leitungswasser, im Bereich von 2 bis 25 ml, vorzugsweise von 5 bis 20 ml, insbesondere von 6 bis 15 ml, fördert.
Dies erlaubt eine kompakte Bauweise, wie sie für ein Haushaltskleingerät notwendig ist, zu realisieren, bei gleichzeitiger Reduzierung des Totvolumens im Schlauch der Pumpe, was durch einen geeigneten Durchmesser des Schlauches, zwischen 4 und 10mm Innendurchmesser, erreicht wird. Der Durchmesser des Pumpengehäuses, beziehungsweise der Durchmesser der Schlauchverformungskörper und der Innendurchmesser des Schlauches bilden eine direkte Abhängigkeit auf die Fördermenge.

In einer dritten bevorzugten Ausführungsform ist die Schlauchpumpe derart ausgelegt, dass sie derart ausgelegt ist, dass sie im zweiten Betriebsmodus mit einer volumen- oder zeitgesteuerten Rücksaugfunktion eine Menge an Wasser, insbesondere Leitungswasser, im Bereich von 10 bis 50 ml, vorzugsweise 15 bis 40 ml, insbesondere von 20 bis 40 ml, fördert.
Dies erlaubt eine kompakte Bauweise, wie sie für ein Haushaltskleingerät notwendig ist, zu realisieren, bei gleichzeitiger Reduzierung des Totvolumens in dem Pumpenschlauch, was durch einen geeigneten Durchmesser des Pumpenschlauchs, zwischen 4 und 10 mm Innendurchmesser, erreicht wird. Der Durchmesser des Pumpengehäuses, beziehungsweise der Durchmesser der Schlauchverformungskörper und der Innendurchmesser des Pumpenschlauchs, bilden eine direkte Abhängigkeit auf die Rücksaugmenge.

Die Heizeinrichtung, insbesondere der Durchlauferhitzer, ist in einer weiteren bevorzugten Ausführungsform derart ausgelegt, dass das hindurchgeführte Wasser, insbesondere Leitungswasser, eine Austrittstemperatur von mindestens 95 °C, vorzugsweise von 97 °C, insbesondere von 100 °C, aufweist.
Dadurch wird das Wasser ausreichend entkeimt, so dass es zu keiner Erkrankung der Babys und Kleinkinder kommen kann. Die Verwendung eines Durchlauferhitzers verringert gegenüber einem Boiler das sich in der Maschine befindliche Totvolumen an Wasser, was sich positiv auf den hygienischen Zustand in der Maschine auswirkt.
Die Heizeinrichtung, insbesondere der Durchlauferhitzer, ist so ausgestaltet, dass das hindurchgeführte Wasser innerhalb einer Zeit von 0 bis 3 min, vorzugsweise von 0 bis 2 min, insbesondere von 1 bis 2 min, erhitzt wird.

In einer weiteren bevorzugten Ausführungsform ist die Kühleinrichtung, insbesondere der Durchlaufkühler, derart ausgelegt, dass das hindurchgeführte Wasser, insbesondere Leitungswasser, eine Austrittstemperatur vorzugsweise in einem Bereich von 35 bis 45 °C, insbesondere von etwa 40 °C, aufweist.

Der Durchlaufkühler kann als Rohr-in-Tank, Rohr-in-Rohr, Peltierkühler oder bevorzugt als Rohr-in-Tank in Kombination mit Peltierkühler ausgeführt sein. Durch die Verwendung eines Durchlaufkühlers kann die Entkeimung und Abkühlung auf Trinktemperatur in einem Schritt erfolgen, so dass ein zeitlicher Vorteil und Komfortgewinn realisiert wird.

Die Kühleinrichtung, insbesondere der Durchlaufkühler, ist so ausgestaltet, dass das hindurchgeführte Wasser innerhalb einer Zeit von 0 bis 3 min, vorzugsweise von 0 bis 2 min, insbesondere von 1 bis 2 min, abgekühlt wird.

In einer weiteren bevorzugten Ausführungsform ist die Kühleinrichtung, insbesondere der Durchlaufkühler, derart ausgelegt ist, dass sie die Babymilchnahrung in einer Verzehrtemperatur in einem Bereich von 35 bis 40 °C, vorzugsweise von etwa 37 °C, bereitstellt.

Dies entspricht der empfohlenen Trinktemperatur für Babymilchnahrung, somit ist die bereitgestellte Babymilchnahrung sofort verzehrbar und optimal bekömmlich für das Baby und Kleinkind.

In einer weiteren bevorzugten Ausführungsform ist der Durchlaufkühler in seiner Kühlleistung in Abhängigkeit der angeforderten Trinkwassermenge regelbar. Dies garantiert, dass unabhängig von der angeforderten Trinkwassermenge die Aufheiztemperatur gleich bleibt und somit die Auslauftemperatur konstant bleibt.

Die von der ersten Pumpe, insbesondere von der volumengesteuerten Dosierpumpe, geförderte oder die von der Steuereinrichtung, insbesondere von der Ventilvorrichtung, dosierte Menge an Wasser, insbesondere an Leitungswasser, ist in einem Bereich von 0 bis 500 ml, vorzugsweise von 10 bis 360 ml, insbesondere von 30 bis 300 ml, einstellbar.
Diese Mengen sind üblicherweise die Trinkmengen der Babys und Kleinkinder und decken den zu erwartenden Bedarf an Flüssigkeitsmenge ab. Weiter sind Trinkflaschen üblicherweise zwischen 60 ml und 300 ml Fassungsvolumen erhältlich.

In einer weiteren bevorzugten Ausführungsform ist der Bereich der Gefäßaufnahme, insbesondere der Bereich der Babyflaschenaufnahme, höhenverstellbar in einem Bereich von 0 bis 70 mm, vorzugsweise von 30 bis 50 mm.
Dieser Verstellbereich ist die maximale Differenz der kleinsten und der größten erhältlichen Trinkflasche am Markt.

In der bevorzugten Ausführungsform ist das Verhältnis von Wasser und Pulver von einer bedienenden Person einstellbar.
So kann der Benutzer die Trinkmilch optimal auf das verwendete Pulver und die Trinkgewohnheiten des Kindes anpassen. Dies ist wichtig, um das vom Hersteller vorgeschriebene Mischungsverhältnis einzustellen und somit die richtige Menge an Nährstoffen und Flüssigkeit für das Baby/Kleinkind zu erreichen.

In einer weiteren bevorzugten Ausführungsform ist das dosierte Gewichts des Pulvers in Abhängigkeit seines Volumens von einer bedienenden Person einstellbar.
Die Menge des Milchpulvers wird heute von allen Milchpulverherstellern durch eigens hergestellte Dosierlöffel angegeben. Jeder Dosierlöffel enthält je nach Hersteller eine unterschiedliche Menge (in Gramm) des Milchpulvers aufgrund der Dichteunterschiede der einzelnen Pulver. Die enthaltene Menge des jeweiligen Dosierlöffels wird vom Hersteller angegeben. Durch die Einstellmöglichkeit und die Angabe des Herstellers kann das optimale empfohlene Gewicht bezogen auf das Volumen des Milchpulvers, passend zu der gewählten Einstellung der Löffelanzahl, eingestellt werden.

In einer weiteren bevorzugten Ausführungsform ist der Wassertank so angeordnet, dass durch die Betätigung eines Steuerelements das Wasser durch die Schwerkraft durch die Heiz- und Kühleinrichtung fließt. Dadurch kann die Vorrichtung kostengünstig und Unempfindlich gegenüber Defekten realisiert werden.
In einer weiteren bevorzugten Ausführungsform ist der Pulvertank so angeordnet, dass durch die Betätigung eines Steuerelements das Pulver durch die Schwerkraft in die Flasche fließt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen
- Fig. 1: eine schematische Darstellung einer ersten bevorzugten Ausführungsform der erfindungsgemäßen Vorrichtung zur Zubereitung von Babymilchnahrung ;
- Fig. 2a: eine schematische Darstellung einer ersten bevorzugten Ausführungsform einer Schlauchpumpe im ersten Betriebsmodus "Pumpen" der erfindungsgemäßen Vorrichtung zur Zubereitung von Babymilchnahrung;
- Fig. 2b: eine schematische Darstellung des ersten Betriebsmodi "Pumpen" der in der Fig. 2a darstellten Schlauchpumpe mit nachfolgenden Einrichtungen;
- Fig. 3a: eine schematische Darstellung der ersten bevorzugten Ausführungsform einer Schlauchpumpe im zweiten Betriebsmodus "Rücksaugen" der erfindungsgemäßen Vorrichtung zur Zubereitung von Babymilchnahrung;
- Fig. 3b: eine schematische Darstellung des zweiten Betriebsmodi "Rückaugen" der in der Fig. 3a darstellten Schlauchpumpe mit nachfolgenden Einrichtungen;
- Fig. 4a: eine schematische Darstellung einer zweiten bevorzugten Ausführungsform einer Schlauchpumpe im ersten Betriebsmodus "Pumpen" der erfindungsgemäßen Vorrichtung zur Zubereitung von Babymilchnahrung;
- Fig. 4b: eine schematische Darstellung einer zweiten bevorzugten Ausführungsform einer Schlauchpumpe im zweiten Betriebsmodus "Rückaugen" der erfindungsgemäßen Vorrichtung zur Zubereitung von Babymilchnahrung;
- Fig. 5a: eine schematische Darstellung einer dritten bevorzugten Ausführungsform einer Schlauchpumpe im ersten Betriebsmodus "Pumpen" der erfindungsgemäßen Vorrichtung zur Zubereitung von Babymilchnahrung;
- Fig. 5b: eine schematische Darstellung einer dritten bevorzugten Ausführungsform einer Schlauchpumpe im zweiten Betriebsmodus "Rückaugen" der erfindungsgemäßen Vorrichtung zur Zubereitung von Babymilchnahrung;
- Fig. 6: beispielhafte Temperaturverläufe der erfindungsgemäßen Vorrichtung zur Zubereitung von Babymilchnahrung während des Betriebs.

In den Figuren sind gleiche oder funktionsgleiche Elemente mit denselben Bezugszeichen versehen worden, sofern nichts anderes angegeben ist.

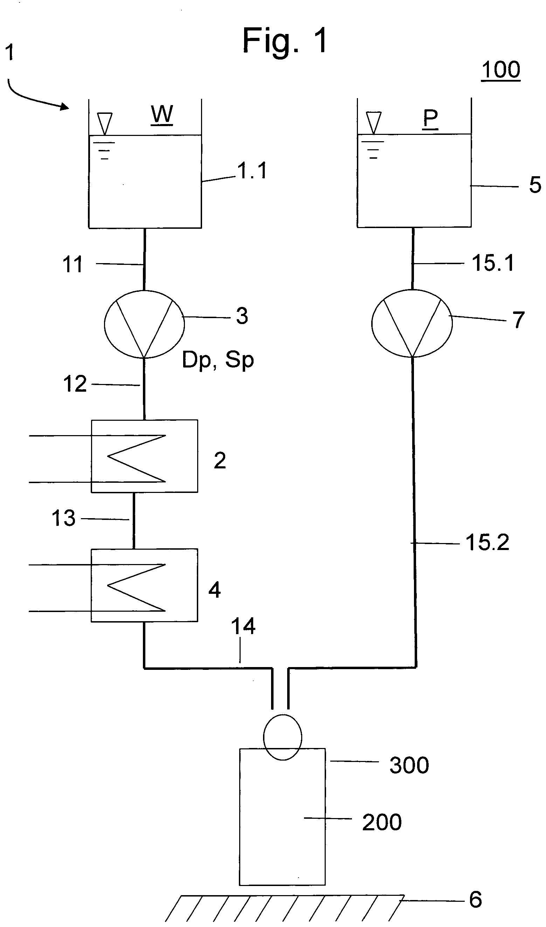

Die Fig. 1 zeigt eine schematische Darstellung einer ersten bevorzugten Ausführungsform der erfindungsgemäßen Vorrichtung 100 zur Zubereitung von Babymilchnahrung 200.

Die Vorrichtung 100 zur Zubereitung von Babymilchnahrung 200, umfasst ein Mittel 1 zur Bereitstellung von Wasser W, insbesondere Leitungswasser. Weiterhin umfasst die Vorrichtung 100 eine Heizeinrichtung 2, insbesondere einen Durchlauferhitzer, welcher mit dem ersten Behälter 1.1 über eine Leitung 11 verbunden ist, in welcher eine erste Pumpe 3, insbesondere eine volumengesteuerte Dosierpumpe, zum dosierten Einbringen des in dem ersten Behälter 1.1 bevorrateten Wassers W, insbesondere Leitungswassers, in die Heizeinrichtung 2, insbesondere in den Durchlauferhitzer, angeordnet ist.

Die erste Pumpe, insbesondere volumengesteuerte Dosierpumpe, ist eine Schlauchpumpe 3 mit mindestens zwei Betriebsmodi DP, SP, wobei ein erster Betriebsmodus DP eine volumengesteuerte Pumpfunktion ("Pumpen") und ein zweiter Betriebsmodus SP eine volumen- oder zeitgesteuerte Rücksaugfunktion ("Rückaugen") umfasst.

Die Vorrichtung 100 beinhaltet eine Kühleinrichtung 4, insbesondere einen Durchlaufkühler, welcher mit der Heizeinrichtung 2, insbesondere dem Durchlauferhitzer, über eine Leitung 13 verbunden ist. Weiterhin ist ein Behältnis 5, in welchem ein festes und wasserlösliches Nahrungsmittel P, insbesondere ein wasserlösliches Milchpulver, bevorratbar ist, vorgesehen.

Zur Aufnahme eines Gefäßes 300, insbesondere einer Babytrinkflasche, ist eine höhenverstellbare Vorrichtung 6 vorhanden, welche einerseits mit der Kühleinrichtung 4, insbesondere mit dem Durchlaufkühler, mittels einer Leitung 14 und andererseits mit dem Behältnis 5 mittels einer Leitung 15.1, 15.2, in welcher eine Dosiereinheit 7, insbesondere eine volumengesteuerte Dosiereinheit, zum dosierten Einbringen des festen und wasserlöslichen Nahrungsmittels P, insbesondere des wasserlöslichen Milchpulvers, in das Gefäß 300, insbesondere in die Babytrinkflasche, vorgesehen ist, verbunden ist.

Das Mittel 1 zur Bereitstellung von Wasser W, insbesondere Leitungswasser, umfasst in der in der Fig. 1 dargestellten Ausführungsform einen ersten Behälter 1.1. Hierbei ist in den Leitungen 11, 12 zwischen dem ersten Behälter 1.1 und der Heizeinrichtung 2, insbesondere einen Durchlauferhitzer, eine erste Pumpe 3, insbesondere eine volumengesteuerte Dosierpumpe, zum dosierten Einbringen des in dem ersten Behälter 1.1 bevorrateten Wassers, insbesondere Leitungswassers, in die Heizeinrichtung 2, insbesondere in den Durchlauferhitzer, angeordnet.

Die Heizeinrichtung 2, insbesondere der Durchlauferhitzer, ist derart ausgelegt, dass das hindurchgeführte Wasser W, insbesondere Leitungswasser, eine Austrittstemperatur von mindestens 95 °C, vorzugsweise von 97 °C, insbesondere von 100 °C, aufweist.

Die Kühleinrichtung 4, insbesondere der Durchlaufkühler, ist derart ausgelegt, dass das hindurchgeführte Wasser W, insbesondere Leitungswasser, eine Austrittstemperatur vorzugsweise in einem Bereich von 35 bis 45 °C, insbesondere von etwa 40 °C, aufweist.

Die Vorrichtung 100 zur Zubereitung von Babymilchnahrung 200 ist derart ausgelegt, dass sie die Babymilchnahrung 200 in einer Verzehrtemperatur in einem Bereich von 35 bis 40 °C, vorzugsweise von etwa 37 °C, bereitstellt.

Der Durchlaufkühler 4 ist in seiner Kühlleistung in Abhängigkeit der angeforderten Wassermenge regelbar.

Die von der ersten Pumpe 3, insbesondere von der volumengesteuerten Dosierpumpe, geförderte Menge an Wasser W, insbesondere an Leitungswasser, ist in einem Bereich von 0 bis 500 ml, vorzugsweise von 10 bis 360 ml, insbesondere von 30 bis 300 ml, einstellbar.

Der Bereich der Gefäßaufnahme 6, insbesondere der Bereich der Babyflaschenaufnahme, ist in einem Bereich von 0 bis 70 mm, vorzugsweise von 30 bis 50 mm, höhenverstellbar.

Das Verhältnis von Wasser W und des festen und wasserlöslichen Nahrungsmittels P, insbesondere des wasserlöslichen Milchpulvers, ist von einer bedienenden Person einstellbar.

Dass das dosierte Gewicht des festen und wasserlöslichen Nahrungsmittels P, insbesondere des wasserlöslichen Milchpulvers in Abhängigkeit seines Volumens von einer bedienenden Person einstellbar ist.

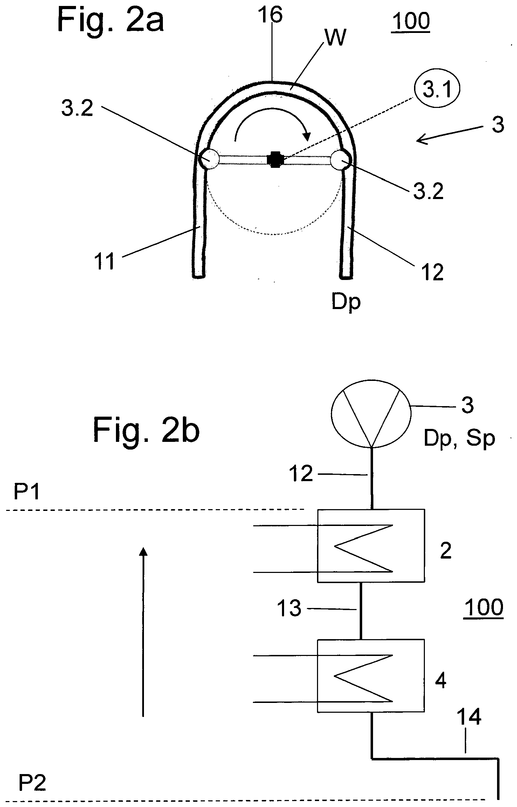

Die Fig. 2a zeigt eine schematische Darstellung einer ersten bevorzugten Ausführungsform einer Schlauchpumpe 3 im ersten Betriebsmodus "Pumpen" der erfindungsgemäßen Vorrichtung 100 zur Zubereitung von Babymilchnahrung.

Die Schlauchpumpe 3 umfasst einen Pumpenantrieb 3.1, zwei über den Pumpenantrieb 3.1 antreibbare Schlauchverformungskörper 3.2 und einen Pumpenschlauch 16, auf welchen die Schlauchverformungskörper 3.2 während des Pumpenbetriebs mechanisch einwirken, um das zu fördernde Wasser W, insbesondere Leitungswasser, durch den Pumpenschlauch 16 zu fördern.

Die Schlauchpumpe 3 ist derart ausgelegt, dass sie im ersten Betriebsmodus "Pumpen" DP mit einer volumengesteuerten Pumpfunktion bei einer vollumfänglichen Bewegung eines Schlauchverformungskörpers 3.2 eine Menge an Wasser W, insbesondere Leitungswasser, im Bereich von 2 bis 25 ml, vorzugsweise von 5 bis 20 ml, insbesondere von 6 bis 15 ml, fördert.

Die Fig. 2b zeigt eine schematische Darstellung des ersten Betriebsmodi "Pumpen" DP der in der Fig. 2a darstellten Schlauchpumpe 3 mit nachfolgenden Einrichtungen. Es sind das erste Wasserniveau P1 und zweite Wasserniveau P2 dargestellt, wobei das Niveau P1 dem Zustand vor Beginn des Heizvorgangs und das Niveau P2 dem Zustand nach dem Fördervorgang entspricht. Weiter sind die Heizeinrichtung 2 und die Kühleinrichtung 4, verbunden durch die Leitung 13 dargestellt, wobei die erste Pumpe 3 mittels Leitung 12 mit der Heizeinrichtung 2 und die Kühleinrichtung 4 mittels der Leitung 14 mit dem Auslauf verbunden ist.

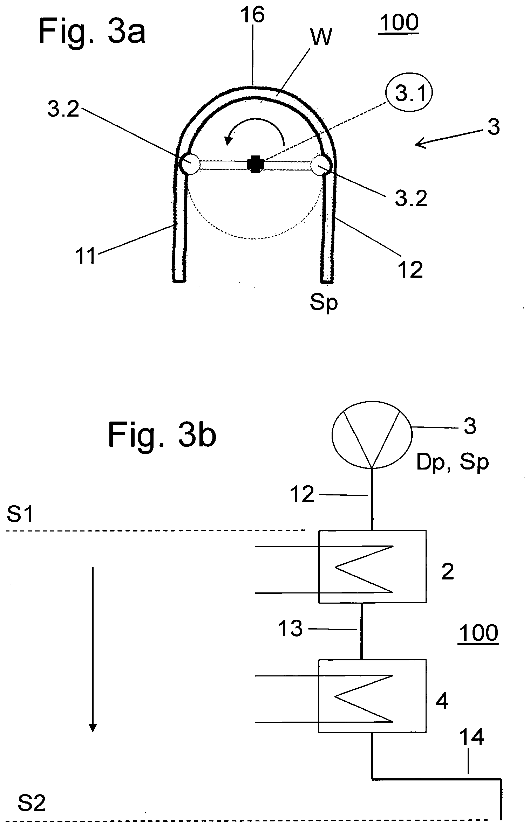

Die Fig. 3a zeigt eine schematische Darstellung der ersten bevorzugten Ausführungsform einer Schlauchpumpe 3 im zweiten Betriebsmodus "Rücksaugen" SP der erfindungsgemäßen Vorrichtung 100 zur Zubereitung von Babymilchnahrung.

Die Schlauchpumpe 3 umfasst einen Pumpenantrieb 3.1, zwei über den Pumpenantrieb 3.1 antreibbare Schlauchverformungskörper 3.2 und einen Pumpenschlauch 16 aufweist, auf welchen die Schlauchverformungskörper 3.2 während des Pumpenbetriebs mechanisch einwirken, um das zu fördernde Wasser W, insbesondere Leitungswasser, durch den Pumpenschlauch 16 zu fördern.

Die Schlauchpumpe 3 ist derart ausgelegt, dass sie im zweiten Betriebsmodus "Rücksaugen" SP mit einer volumen- oder zeitgesteuerten Rücksaugfunktion eine Menge an Wasser W, insbesondere Leitungswasser, im Bereich von 10 bis 50 ml, vorzugsweise 15 bis 40 ml, insbesondere von 20 bis 40 ml, fördert.

Die Fig. 3b zeigt eine schematische Darstellung des zweiten Betriebsmodi "Rücksaugen" SP der in der Fig. 3a darstellten Schlauchpumpe 3 mit nachfolgenden Einrichtungen. Es sind das erste Wasserniveau S1 und zweite Wasserniveau S2 dargestellt, wobei das Niveau S2 dem Zustand vor Beginn des Rücksaugvorgangs und das Niveau P1 dem Zustand nach dem Rücksaugvorgang entspricht. Weiter sind die Heizeinrichtung 2 und die Kühleinrichtung 4, verbunden durch die Leitung 13 dargestellt, wobei die erste Pumpe 3 mittels der Leitung 12 mit der Heizeinrichtung 2 und die Kühleinrichtung 4 mittels der Leitung 14 mit einem Auslauf verbunden ist.

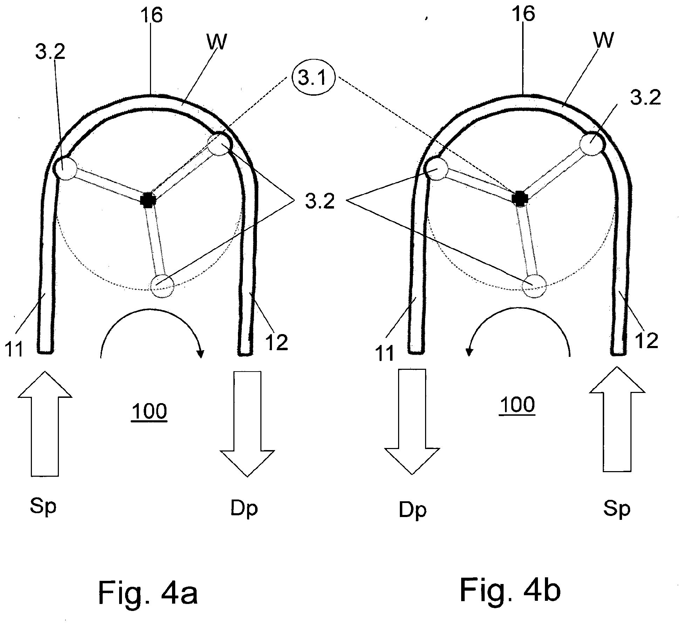

Die Fig. 4a zeigt eine schematische Darstellung einer zweiten bevorzugten Ausführungsform einer Schlauchpumpe 3 im ersten Betriebsmodus "Pumpen" DP der erfindungsgemäßen Vorrichtung 100 zur Zubereitung von Babymilchnahrung.

Die Schlauchpumpe 3 umfasst einen Pumpenantrieb 3.1, drei über den Pumpenantrieb 3.1 antreibbare Schlauchverformungskörper 3.2 und einen Pumpenschlauch 16 aufweist, auf welchen die Schlauchverformungskörper 3.2 während des Pumpenbetriebs mechanisch einwirken, um das zu fördernde Wasser W, insbesondere Leitungswasser, durch den Pumpenschlauch 16 zu fördern.

Die Fig. 4b zeigt eine schematische Darstellung einer zweiten bevorzugten Ausführungsform einer Schlauchpumpe 3 im zweiten Betriebsmodus "Rücksaugen" SP der erfindungsgemäßen Vorrichtung 100 zur Zubereitung von Babymilchnahrung.

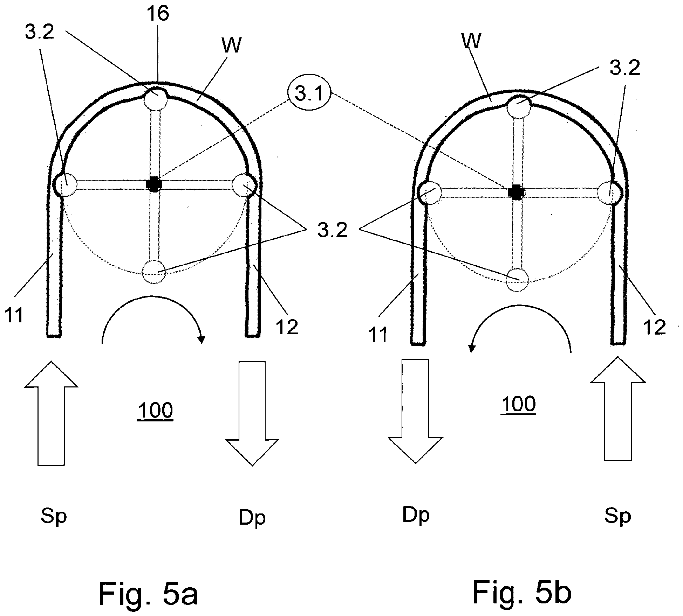

Die Fig. 5a zeigt eine schematische Darstellung einer dritten bevorzugten Ausführungsform einer Schlauchpumpe 3 im ersten Betriebsmodus "Pumpen" DP der erfindungsgemäßen Vorrichtung 100 zur Zubereitung von Babymilchnahrung.

Die Schlauchpumpe 3 umfasst einen Pumpenantrieb 3.1, vier über den Pumpenantrieb 3.1 antreibbare Schlauchverformungskörper 3.2 und einen Pumpenschlauch 16 aufweist, auf welchen die Schlauchverformungskörper 3.2 während des Pumpenbetriebs mechanisch einwirken, um das zu fördernde Wasser W, insbesondere Leitungswasser, durch den Pumpenschlauch 16 zu fördern.

Die Fig. 5b zeigt eine schematische Darstellung einer dritten bevorzugten Ausführungsform einer Schlauchpumpe 3 im zweiten Betriebsmodus "Rücksaugen" SP der erfindungsgemäßen Vorrichtung 100 zur Zubereitung von Babymilchnahrung.

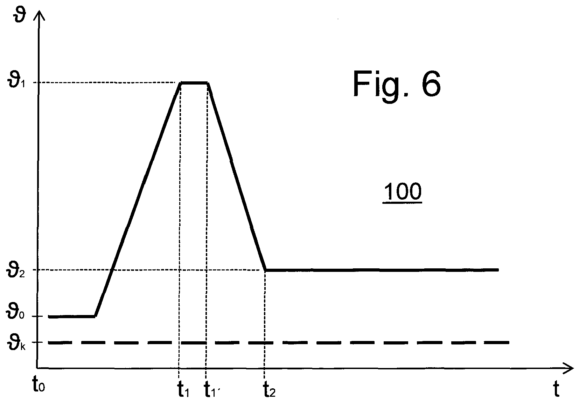

Die Fig. 6 zeigt beispielhafte Temperaturverläufe der erfindungsgemäßen Vorrichtung 100 zur Zubereitung von Babymilchnahrung während des Betriebs.

Die Temperaturen des bereitgestellten Wassers W, insbesondere des Leitungswassers, im Gerät sind auf der Ordinate, die Zeiten auf der Abszisse aufgetragen sind. Die Temperatur ϑk beschreibt die Temperatur des Durchlaufkühlers, welche unterhalb der Umgebungstemperatur liegen kann. Die Temperatur ϑ0 beschreibt die Umgebungstemperatur, welche auch der Temperatur des bereitgestellten Wassers W, insbesondere Leitungswasser, entsprechen kann. Eine weitere Temperatur ϑ1 beschreibt die obere Temperatur des Systems, welche die maximale von der Heizeinrichtung 2 erzeugte Temperatur im bereitgestellten Wasser W, insbesondere Leitungswasser, darstellt.

Die Temperatur ϑ2 beschreibt die Zieltemperatur des Systems, welche der Austrittstemperatur der Kühleinrichtung 4, insbesondere Durchlaufkühler, entspricht.

Die auf der Abszisse aufgetragene Zeit t0 entspricht den Startzeitpunkt des Prozesses. Nach einer Zeit t1 wird die maximale Temperatur ϑ1 erreicht. Nach einer Verweildauer von t1' wird das hindurchgeführte Wasser W in einer Zeit t2 auf die Zieltemperatur ϑ2 abgekühlt.

### Bezugszeichenliste

- 100: Vorrichtung zur Zubereitung von Babymilchnahrung
- 200: Babymilchnahrung
- 300: Gefäß
- 1: Mittel zur Bereitstellung von Wasser
- 1.1: Erster Behälter
- 2: Heizeinrichtung; Durchlauferhitzer
- 3: Erste Pumpe; volumengesteuerte Dosierpumpe
- 3.1: Pumpenantrieb
- 3.2: Schlauchverdrängungskörper
- 4: Kühleinrichtung; Durchlaufkühler
- 5: Behältnis; Pulvertank
- 6: Höhenverstellbare Vorrichtung
- 7: Dosiereinheit; volumengesteuerte Dosiereinheit; Dosierschnecke
- 11: Leitung
- 12: Leitung
- 13: Leitung
- 14: Leitung
- 15.1: Leitung
- 15.2: Leitung
- 16: Pumpenschlauch

- DP: Pumpmodus
- P: Nahrungsmittel, wasserlösliches Milchpulver,
- P1: Erstes Wasserniveau im Betriebsmodus "Pumpen"
- P2: Zweites Wasserniveau im Betriebsmodus "Pumpen"
- SP: Saugmodus
- S1: Erstes Wasserniveau im Betriebsmodus "Rücksaugen"
- S2: Zweites Wasserniveau im Betriebsmodus "Rücksaugen"
- t0: Startzeitpunkt
- t1: Heizzeit
- t1': Verweilzeit
- t2: Kühlzeit
- W: Wasser; Leitungswasser
- ϑk: Temperatur des Durchlaufkühlers
- ϑ0: Umgebungstemperatur, Wassertemperatur
- ϑ1: Heiztemperatur
- ϑ2: Zieltemperatur, Verzehrtemperatur

## Patentansprüche

1. Vorrichtung (100) zur Zubereitung von Babymilchnahrung (200), umfassend
- ein Mittel (1) zur Bereitstellung von Wasser (W), insbesondere Leitungswasser, welches einen ersten Behälter (1.1) umfasst,
- eine Heizeinrichtung (2), insbesondere einen Durchlauferhitzer, welcher mit dem Mittel (1) zur Bereitstellung von Wasser (W), insbesondere Leitungswasser, über mindestens eine Leitung (11, 12) verbunden ist,
- eine Kühleinrichtung (4), insbesondere einen Durchlaufkühler, welcher mit der Heizeinrichtung (2), insbesondere mit dem Durchlauferhitzer, über eine Leitung (13) verbunden ist,
- ein Behältnis (5), in welchem ein festes und wasserlösliches Nahrungsmittel (P), insbesondere wasserlösliches Milchpulver, bevorratbar ist,
- eine Einrichtung (6) zur Aufnahme eines Gefäßes (300), insbesondere einer Babytrinkflasche, welche einerseits mit der Kühleinrichtung (4), insbesondere mit dem Durchlaufkühler, mittels einer Leitung (14) und andererseits mit einem Behältnis (5) mittels einer Leitung (15.1, 15.2), in welcher eine volumengesteuerte Dosiereinrichtung (7) zum dosierten Einbringen des festen und wasserlöslichen Nahrungsmittels, insbesondere wasserlöslichen Milchpulvers, in das Gefäß (300), insbesondere in die Babytrinkflasche, angeordnet ist, verbunden ist,
wobei zwischen den Leitungen (11, 12) eine erste Pumpe (3), insbesondere eine volumengesteuerte Dosierpumpe, zum dosierten Einbringen des in dem ersten Behälter (1.1) bevorrateten Wassers (W), insbesondere Leitungswassers, in die Heizeinrichtung (2), insbesondere in den Durchlauferhitzer, über die Leitung (12) angeordnet ist,
**dadurch gekennzeichnet,**
**dass** die erste Pumpe, insbesondere volumengesteuerte Dosierpumpe, eine Schlauchpumpe (3) mit mindestens zwei Betriebsmodi (DP, SP) ist, wobei ein erster Betriebsmodus (DP) eine volumengesteuerte Pumpfunktion und ein zweiter Betriebsmodus (SP) eine volumen- oder zeitgesteuerte Rücksaugfunktion umfasst.

2. Vorrichtung (100) zur Zubereitung von Babymilchnahrung (200) nach Anspruch 1,
**dadurch gekennzeichnet,**
**dass** die Schlauchpumpe (3) einen Pumpenantrieb, mindestens zwei über den Pumpenantrieb (3.1) antreibbare Schlauchverformungskörper (3.2) und einen Pumpenschlauch (16) aufweist, auf welchen die Schlauchverformungskörper (3.2) während des Pumpenbetriebs mechanisch einwirken, um das zu fördernde Wasser (W), insbesondere Leitungswasser, durch den Pumpenschlauch (16) zu fördern.

3. Vorrichtung (100) zur Zubereitung von Babymilchnahrung (200) nach Anspruch 1 oder 2,
**dadurch gekennzeichnet,**
**dass** die Schlauchpumpe (3) derart ausgelegt ist, dass sie im ersten Betriebsmodus (DP) mit einer volumengesteuerten Pumpfunktion bei einer vollumfänglichen Bewegung eines Schlauchverformungskörpers (3.2) eine Menge an Wasser (W), insbesondere Leitungswasser, im Bereich von 2 bis 25 ml, vorzugsweise von 5 bis 20 ml, insbesondere von 6 bis 15 ml, fördert.

4. Vorrichtung (100) zur Zubereitung von Babymilchnahrung (200) nach Anspruch 1, 2 oder 3,
**dadurch gekennzeichnet,**
**dass** die Schlauchpumpe (3) derart ausgelegt ist, dass sie im zweiten Betriebsmodus (SP) mit einer volumen- oder zeitgesteuerten Rücksaugfunktion eine Menge an Wasser (W), insbesondere Leitungswasser, im Bereich von 10 bis 50 ml, vorzugsweise 15 bis 40 ml, insbesondere von 20 bis 40 ml, fördert.

5. Vorrichtung (100) zur Zubereitung von Babymilchnahrung (200) nach einem der vorhergehenden Ansprüche,
**dadurch gekennzeichnet,**
**dass** die Heizeinrichtung (2), insbesondere der Durchlauferhitzer, derart ausgelegt ist, dass das hindurchgeführte Wasser (W), insbesondere Leitungswasser, eine Austrittstemperatur von mindestens 95 °C, vorzugsweise von 97 °C, insbesondere von 100 °C, aufweist.

6. Vorrichtung (100) zur Zubereitung von Babymilchnahrung (200) nach einem der vorhergehenden Ansprüche,
**dadurch gekennzeichnet,**
**dass** die Kühleinrichtung (4), insbesondere der Durchlaufkühler, derart ausgelegt ist, dass das hindurchgeführte Wasser (W), insbesondere Leitungswasser, eine Austrittstemperatur in einem Bereich von 35 bis 45 °C, vorzugsweise von etwa 40 °C, aufweist.

7. Vorrichtung (100) zur Zubereitung von Babymilchnahrung (200) nach einem der vorhergehenden Ansprüche,
**dadurch gekennzeichnet,**
**dass** sie derart ausgelegt ist, dass sie die Babymilchnahrung (200) in einer Verzehrtemperatur in einem Bereich von 35 bis 40 °C, vorzugsweise von etwa 37 °C, bereitstellt.

8. Vorrichtung (100) zur Zubereitung von Babymilchnahrung (200) nach einem der vorhergehenden Ansprüche,
**dadurch gekennzeichnet,**
**dass** der Durchlaufkühler (4) in seiner Kühlleistung in Abhängigkeit der angeforderten Menge an Wasser (W), insbesondere Leitungswasser, regelbar ist.

9. Vorrichtung (100) zur Zubereitung von Babymilchnahrung (200) nach einem der vorhergehenden Ansprüche,
**dadurch gekennzeichnet,**
**dass** die von der ersten Pumpe (3), insbesondere von der volumengesteuerten Dosierpumpe, geförderte oder die von der Steuereinrichtung (8), insbesondere von der Ventilvorrichtung, dosierte Menge an Wasser (W), insbesondere Leitungswasser, in einem Bereich von 0 bis 500 ml, vorzugsweise von 10 bis 360 ml, insbesondere von 30 bis 300 ml, einstellbar ist.

10. Vorrichtung (100) zur Zubereitung von Babymilchnahrung (200) nach einem der vorhergehenden Ansprüche,
**dadurch gekennzeichnet,**
**dass** der Bereich der Gefäßaufnahme (6), insbesondere Babyflaschenaufnahme, höhenverstellbar in einem Bereich von 0 bis 70mm, vorzugsweise von 30 bis 50 mm, ist.

11. Vorrichtung (100) zur Zubereitung von Babymilchnahrung (200) nach einem der vorhergehenden Ansprüche,
**dadurch gekennzeichnet,**
**dass** das Verhältnis von Wasser (W) und festem und wasserlöslichem Nahrungsmittel (P), insbesondere des wasserlöslichen Milchpulvers, von einer bedienenden Person einstellbar ist.

12. Vorrichtung (100) zur Zubereitung von Babymilchnahrung (200) nach einem der vorhergehenden Ansprüche,
**dadurch gekennzeichnet,**
**dass** das dosierte Gewicht des festen und wasserlöslichen Nahrungsmittels (P), insbesondere des wasserlösliches Milchpulvers, in Abhängigkeit seines Volumens von einer bedienenden Person einstellbar ist.

## Claims

1. Device (100) for preparing baby milk (200), comprising
- a means (1) for providing water (W), in particular tap water, which comprises a first container (1.1),
- a heating device (2), in particular a water heater, which is connected to the means (1) for providing water (W), in particular tap water, via at least one pipe (11, 12),
- a cooling device (4), in particular a once-through cooler, which is connected to the heating device (2), in particular connected to the water heater via a line (13),
- a container (5) in which a solid and water-soluble food (P), in particular water-soluble milk powder, can be stored,
- a device (6) for receiving a vessel (300), in particular a baby drinking bottle, which on the one hand with the cooling device (4), in particular with the continuous cooler, by means of a line (14) and on the other hand with a container (5) by means of a it is connected to a line (15.1, 15.2) in which a volume-controlled metering device (7) for the metered introduction of the solid and water-soluble food (P), in particular water-soluble milk powder, into the container (300), in particular into the baby drinking bottle, is connected, wherein between the lines (11 , 12) a first pump (3), in particular a volume-controlled metering pump, for the metered introduction of the water (W), in particular tap water, stored in the first container (1.1) into the heating device (2), in particular in the instantaneous water heater, is arranged via the line (12),
**characterized in**
**that** the first pump, in particular volume-controlled metering pump, is a peristaltic pump (3) with at least two operating modes (DP, SP), a first operating mode (DP) a volume-controlled pump function and a second operating mode (SP) comprises a volume-controlled or time-controlled suction function.

2. Device (100) for preparing baby milk (200) according to claim 1, **characterized in that** the peristaltic pump (3) has a pump drive, at least two hose deformation bodies (3.2) which can be driven via the pump drive (3.1) and a pump hose (16) on which the hose deformation bodies (3.2) act mechanically during pump operation in order to convey the water (W) to be pumped, in particular tap water, through the pump hose (16).

3. Device (100) for the preparation of baby milk (200) according to claim 1 or 2, **characterized in that** the peristaltic pump (3) is designed such that in the first operating mode (DP) it has a volume-controlled pump function with a full movement of a tube deforming body (3.2) promotes an amount of water (W), in particular tap water, in the range from 2 to 25 ml, preferably from 5 to 20 ml, in particular from 6 to 15 ml.

4. Device (100) for the preparation of baby milk (200) according to claim 1, 2 or 3, **characterized in that** the peristaltic pump (3) is designed such that in the second operating mode (SP) it has a volume with a volume- or time-controlled suction function Water (W), in particular tap water, in the range of 10 to 50 ml, preferably 15 to 40 ml, in particular 20 to 40 ml, promotes.

5. Device (100) for the preparation of baby milk (200) according to one of the preceding claims, **characterized in that** the heating device (2), in particular the instantaneous water heater, is designed such that the water (W), in particular tap water, which is passed through it, has an outlet temperature of at least 95 °C, preferably from 97 °C, in particular from 100 °C.

6. Device (100) for preparing baby milk (200) according to one of the preceding claims, **characterized in that** the cooling device (4), in particular the once-through cooler, is designed such that the water (W) passed through, in particular tap water, has an outlet temperature in one range from 35 to 45 °C, preferably from about 40 °C.

7. Device (100) for the preparation of baby milk (200) according to one of the preceding claims, **characterized in that** it is designed such that it has the baby milk (200) at a consumption temperature in a range from 35 to 40 °C, preferably of about 37 °C.

8. Device (100) for the preparation of baby milk (200) according to one of the preceding claims, **characterized in that** the cooling capacity (4) of its cooling capacity can be regulated as a function of the requested amount of water (W), in particular tap water.

9. Device (100) for the preparation of baby milk (200) according to one of the preceding claims, **characterized in that** the pumped by the first pump (3), in particular by the volume-controlled metering pump, or by the control device (8), in particular by the valve device , dosed amount of water (W), in particular tap water, can be set in a range from 0 to 500 ml, preferably from 10 to 360 ml, in particular from 30 to 300 ml.

10. Device (100) for preparing baby milk (200) according to one of the preceding claims, **characterized in that** the area of the receptacle (6), in particular baby bottle receptacle, is height-adjustable in a range from 0 to 70 mm, preferably from 30 to 50 mm.

11. Device (100) for preparing baby milk (200) according to one of the preceding claims, **characterized in that** the ratio of water (W) and solid and water-soluble food (P), in particular the water-soluble milk powder, is adjustable by an operator.

12. Device (100) for the preparation of baby milk (200) according to one of the preceding claims, **characterized in that** the metered weight of the solid and water-soluble food (P), in particular the water-soluble milk powder, can be adjusted by an operator as a function of its volume.

## Revendications

1. Dispositif (100) de préparation du lait maternisé (200), comprenant
- un moyen (1) pour fournir de l'eau (W), en particulier de l'eau du robinet, qui comprend un premier récipient (1.1),
- un dispositif de chauffage (2), en particulier un chauffe-eau, qui est relié aux moyens (1) d'alimentation en eau (W), en particulier l'eau du robinet, via au moins une conduite (11, 12),
- un dispositif de refroidissement (4), notamment un refroidisseur à passage unique, qui est connecté au dispositif de chauffage (2), notamment relié au chauffe-eau par une ligne (13),
- un récipient (5) dans lequel un aliment solide et hydrosoluble (P), notamment du lait en poudre hydrosoluble, peut être stocké,
- un dispositif (6) de réception d'un récipient (300), en particulier un biberon, qui d'une part avec le dispositif de refroidissement (4), en particulier avec le refroidisseur continu, au moyen d'une ligne (14) et d'autre part avec un récipient (5) au moyen d'un il est connecté à une ligne (15.1, 15.2) dans laquelle un dispositif de dosage à volume contrôlé (7) pour l'introduction dosée de l'aliment solide et hydrosoluble (P), en particulier le lait en poudre hydrosoluble, dans le récipient (300), en particulier dans le biberon, est connecté, dans lequel entre les conduites (11, 12), une première pompe (3), notamment une pompe doseuse à volume contrôlé, pour l'introduction dosée de l'eau (W), notamment de l'eau du robinet, stockée dans le premier récipient (1.1) dans le dispositif de chauffage (2), en particulier dans le chauffe-eau instantané, est agencée via la ligne (12),
**caractérisée en ce**
**que** la première pompe, en particulier la pompe doseuse à volume contrôlé, est une pompe péristaltique (3) avec au moins deux modes de fonctionnement (DP, SP), un premier mode de fonctionnement (DP) une fonction de pompe à volume contrôlé et un second mode de fonctionnement (SP) comprennent une fonction d'aspiration à volume contrôlé ou temporisé.

2. Dispositif (100) de préparation du lait maternisé (200) selon la revendication 1, **caractérisé en ce que** la pompe péristaltique (3) a un entraînement de pompe, au moins deux corps de déformation de tuyau (3.2) qui peuvent être entraînés via l'entraînement de pompe (3.1) et un tuyau de pompe (16) sur lequel les corps de déformation de tuyau (3.2) agissent mécaniquement pendant le fonctionnement de la pompe pour acheminer l'eau (W) à pomper, en particulier l'eau du robinet, à travers le tuyau de pompe (16).

3. Dispositif (100) de préparation du lait maternisé (200) selon la revendication 1 ou 2, **caractérisé en ce que** la pompe péristaltique (3) est conçue de telle sorte que dans le premier mode de fonctionnement (DP) elle a une fonction de pompe à volume contrôlé avec un mouvement complet d'un corps déformant le tube (3.2) favorise une quantité d'eau (W), notamment d'eau du robinet, comprise entre 2 et 25 ml, de préférence entre 5 et 20 ml, notamment entre 6 et 15 ml.

4. Dispositif (100) de préparation du lait maternisé (200) selon la revendication 1, 2 ou 3, **caractérisé en ce que** la pompe péristaltique (3) est conçue de telle sorte que dans le deuxième mode de fonctionnement (SP), elle a un volume avec une fonction d'aspiration commandée en fonction du volume ou du temps l'eau (W), en particulier l'eau du robinet, dans la gamme de 10 à 50 ml, de préférence de 15 à 40 ml, en particulier de 20 à 40 ml, favorise.

5. Dispositif (100) de préparation du lait maternisé (200) selon l'une des revendications précédentes, **caractérisé en ce que** le dispositif de chauffage (2), en particulier le chauffe-eau instantané, est conçu de telle sorte que l'eau (W), en particulier l'eau du robinet qui la traverse, a une température de sortie d'au moins 95 °C, de préférence de 97 °C, en particulier de 100 °C.

6. Dispositif (100) de préparation du lait maternisé (200) selon l'une des revendications précédentes, **caractérisé en ce que** le dispositif de refroidissement (4), en particulier le refroidisseur à passage unique, est conçu de telle sorte que l'eau (W) traversée, en particulier l'eau du robinet, a une température de sortie en une plage de 35 à 45 °C, de préférence d'environ 40 °C.

7. Dispositif (100) de préparation du lait maternisé (200) selon l'une des revendications précédentes, **caractérisé en ce qu'**il est conçu de telle sorte qu'il présente l'aliment pour bébé (200) à une température de consommation dans une plage de 35 à 40 °C, de préférence d'environ 37 °C.

8. Dispositif (100) de préparation du lait maternisé (200) selon l'une des revendications précédentes, **caractérisé en ce que** la puissance frigorifique (4) de sa puissance frigorifique peut être réglée en fonction de la quantité d'eau (W) demandée, en particulier de l'eau du robinet.

9. Dispositif (100) de préparation du lait maternisé (200) selon l'une des revendications précédentes, **caractérisé en ce que** le pompé par la première pompe (3), en particulier par la pompe doseuse à volume contrôlé, ou par le dispositif de commande (8), en particulier par le dispositif de soupape , la quantité dosée d'eau (W), en particulier l'eau du robinet, peut être réglée dans une plage de 0 à 500 ml, de préférence de 10 à 360 ml, en particulier de 30 à 300 ml.

10. Dispositif (100) de préparation du lait maternisé (200) selon l'une des revendications précédentes, **caractérisé en ce que** la zone du récipient (6), en particulier du biberon, est réglable en hauteur dans une plage de 0 à 70 mm, de préférence de 30 à 50 mm.

11. Dispositif (100) de préparation du lait maternisé (200) selon l'une des revendications précédentes, **caractérisé en ce que** le rapport eau (W) et aliments solides et hydrosolubles (P), en particulier le lait en poudre hydrosoluble, est réglable par un opérateur.

12. Dispositif (100) de préparation du lait maternisé (200) selon l'une des revendications précédentes, **caractérisé en ce que** le poids mesuré de l'aliment solide et hydrosoluble (P), en particulier du lait en poudre hydrosoluble, peut être réglé par un opérateur en fonction de son volume.
